# FASCICULE DE BREVET EUROPEEN

(11) **EP 1 039 195 B1**
(45) Date de publication et mention de la délivrance du brevet: **26.11.2003**
(21) Numéro de dépôt: 00400564.1
(22) Date de dépôt: 02.03.2000
(51) Int. Cl.: F16L 3/123

(54) **Collier de fixation pour pièce tubulaire**
Schelle zur Befestigung eines rohrförmigen Körpers
Clamp for a tubular article

(30) Priorité: 26.03.1999 FR 9903812
(43) Date de publication de la demande: 27.09.2000
(73) Titulaire: ESPA, 45401 Fleury les Aubrais (FR)
(72) Inventeur: Dolez, Marc, 45160 Olivet (FR)
(74) Mandataire: Jacquard, Philippe Jean-Luc

(56) Documents cités:
- FR-A- 2 513 449
- GB-A- 578 891
- US-A- 2 423 627
- US-A- 5 220 710

## Description

La présente invention concerne un collier de fixation pour pièce tubulaire telle qu'un câble, un flexible, un raccord, ou bien une tubulure.

Les colliers de fixation sont des éléments métalliques destinés à assurer le maintien de câbles, tubulures, flexibles, « durites » ou accessoires.

Lors de son utilisation, il est nécessaire d'ouvrir le collier afin de pouvoir le passer autour de l'élément à serrer, cette ouverture se faisant par déformation de la bande métallique qui le constitue ou par l'intermédiaire d'une « charnière », ou toute autre articulation.

Les difficultés rencontrées à ce jour sont liées au fait que le collier, une fois monté, reste ouvert et libre en translation et en rotation sur l'objet à serrer, ce qui ne permet pas ou peu, de faire du pré-assemblage, et génère des difficultés au moment de positionner la vis de maintien ou autre élément de serrage.

Des solutions existent aujourd'hui par l'utilisation de systèmes de clips intégrés au collier.

Des colliers de fixation à serrage par un système vis-écrou sont connus des Brevets Américains US 2 423 627 (TINNERMAN) et US 5 220 710 (LAUDAN). Un collier d'un type similaire est connu du Brevet britannique GB 578 891 (ADEL PRECISION PRODUCTS Corp.). Son serrage met en oeuvre un auto-taraudage. L'inconvénient de ces systèmes connus est qu'ils obligent à serrer complètement le collier à la main lors du positionnement, et ne permettent pas de glisser sur l'objet à serrer lors du positionnement « fin », et de plus, ils n'autorisent aucune capacité de serrage supplémentaire.

L'invention a pour objet un collier de fixation qui permette un pré-positionnement précis du collier à un endroit désiré avant sa fixation.

Dans ce but, l'invention concerne un collier de fixation pour pièce tubulaire telle qu'un câble, un flexible, un raccord, ou bien une tubulure, tel que défini dans la revendication 1.

Le collier présente avantageusement une pluralité de griffes réparties sur le pourtour dudit trou.

La région de boucle peut être entourée par un élément de protection, notamment en élastomère.

L'invention concerne également un procédé de pose d'un collier du type précité et qui comporte
a) une mise en place de la région de boucle autour de la pièce tubulaire ;
b) une introduction par translation du premier élément de fixation pour réaliser le pré-serrage par encliquetage ;
c) un positionnement du collier à un endroit désiré de la pièce tubulaire ;
d) un serrage de l'élément de fixation.

Pour un dispositif de fixation du type vis-écrou, l'étape c) peut comporter :
c1) un pré-positionnement du collier sur la pièce tubulaire ;
c2) un engagement de la vis sur l'écrou correspondant ;
c3) un positionnement du collier à l'endroit désiré.

La description ci-après, donnée à titre d'exemple non limitatif, permettra, en liaison avec les dessins annexés, de mieux expliciter la présente invention.
- la figure 1 représente en perspective un collier selon un mode de réalisation préféré de l'invention ;
- la figure 2a représente une vue latérale d'un collier selon une variante de la figure 1, et
- la figure 2b est une vue de dessous de la figure 2a.

Un collier de fixation selon l'invention, désigné par le repère général 1, et destiné à être monté sur une pièce tubulaire 2, présente une région de boucle 11 qui forme une boucle ouverte dont les bords 4 et 6 sont espacés en 19 pour permettre le serrage de deux pattes de serrage 14 et 16, qui se font face en prolongeant la boucle ouverte 11, et dont chacune est pourvue d'au moins un trou 15 et 17. La boucle 11 et les pattes 14 et 16 sont formées à partir d'une bande métallique cintrée et pliée. La région de boucle 11 est avantageusement revêtue, par exemple par surmoulage, par une protection 12, par exemple en caoutchouc, qui permet d'apporter une relative souplesse au serrage du collier sur la pièce 2 et de découpler les vibrations.

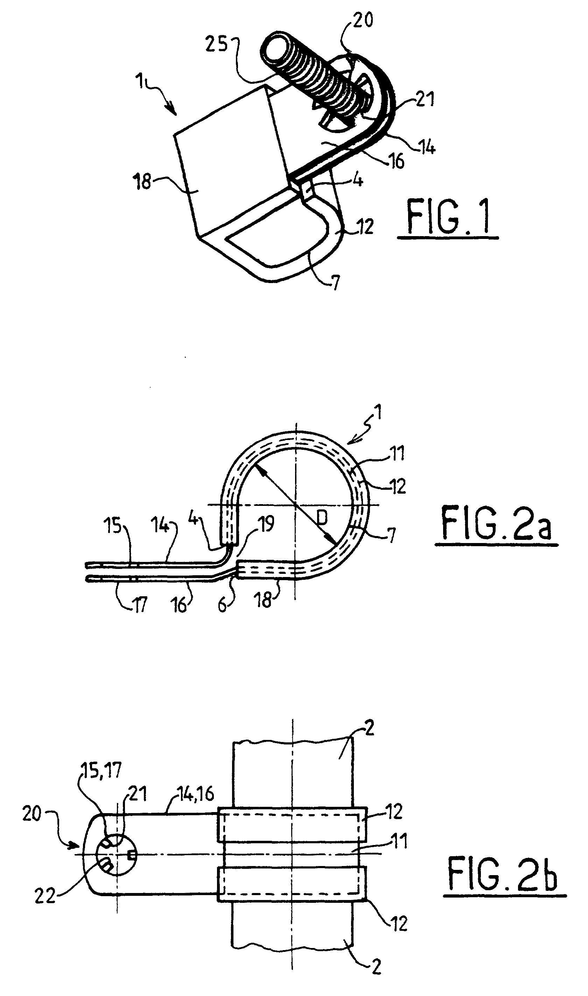

A la figure 1, la face interne de la boucle 11, en l'occurrence, la face interne 7 de la protection 12 est en forme de U, alors qu'aux figures 2a et 2b, elle est circulaire et présente un diamètre D. Dans les deux exemples représentés, la boucle 11 présente une face d'appui plane 18 qui jouxte les pattes 14 et 16, et qui permet au collier de s'appuyer sur un support tel qu'un élément de carrosserie d'automobile une fois le collier mis en place et le serrage effectué.

Le trou 15 et/ou le trou 17 présente une ou plusieurs griffes 21 qui permettent au filetage d'une vis 20 d'être introduite par pression. Les griffes 21 dont le bord interne 22 laisse à la vis 20 un passage utile de diamètre inférieur au diamètre externe de son filetage 25, présentent une certaine élasticité qui permet au filetage 25 de passer par effet d'encliquetage, en vue de réaliser un pré-serrage et un maintien du collier 1 qui permet ensuite à celui-ci d'être pré-positionné en le déplaçant le long de l'élément tubulaire 2 jusqu'à l'endroit désiré. Ensuite, par serrage de l'écrou, par exemple préalablement engagé sur le filetage 25, il est possible d'assurer la mise en place définitive du collier 1.

Le dispositif selon l'invention permet ainsi grâce à cette fonction de pré-serrage, de réaliser par glissement, un positionnement fin du collier 1 sur l'élément tubulaire 2.

Cette fonction permet également de réaliser un pré-assemblage avant de procéder au serrage proprement dit.

## Revendications

1. Collier de fixation pour pièce tubulaire telle qu'un câble, un flexible, un raccord, ou bien une tubulure, présentant une région de boucle pour entourer la pièce tubulaire, cette région de boucle étant ouverte et se terminant par des pattes de fixation (14, 16) pourvues chacune d'au moins un trou de fixation (15, 17), et comportant un dispositif de fixation comportant un premier élément de fixation (20) ainsi qu'un deuxième élément de fixation complémentaire du premier pour assurer le serrage du collier sur la pièce tubulaire, **caractérisé en ce qu'**au moins un dit trou de fixation (15, 17) présente au moins une griffe (21) permettant le pré-serrage du collier avec effet de cliquet en translatant le premier élément de fixation (20).

2. Collier selon la revendication 1, **caractérisé en ce que** ledit premier élément de fixation est une vis, et **en ce que** ledit élément complémentaire est un écrou.

3. Collier selon une des revendications 1 ou 2, **caractérisé en ce qu'**il présente une pluralité de griffes (21) réparties sur le pourtour dudit trou (17).

4. Collier selon une des revendications précédentes, **caractérisé en ce qu'**il comporte un élément de protection (12) entourant la région de boucle (11).

5. Collier selon la revendication 4, **caractérisé en ce que** l'élément de protection (12) est en élastomère.

6. Collier selon une des revendications précédentes, **caractérisé en ce que** la région de boucle (11) présente une face d'appui plane (18) qui jouxte les pattes de fixation (14, 16).

7. Procédé de pose d'un collier selon une des revendications précédentes, **caractérisé en ce qu'**il comporte :
a) une mise en place de la région de boucle (11) autour de la pièce tubulaire (2) ;
b) une introduction par translation du premier élément de fixation (20) pour réaliser ledit pré-serrage par encliquetage ;
c) un positionnement du collier (1) à un endroit désiré de la pièce tubulaire (2) ;
d) un serrage du collier à l'aide de l'élément de fixation complémentaire.

8. Procédé selon la revendication 7, **caractérisé en ce que** le dispositif de fixation est un ensemble vis-écrou, et l'étape c) comporte :
c1) un pré-positionnement du collier (1) sur la pièce tubulaire (2) ;
c2) un engagement de la vis (20) sur l'écrou correspondant ;
c3) un positionnement définitif du collier (1) à l'endroit désiré.

## Claims

1. A mounting clamp for a tubular part such as a cable, a hose, a coupling, or a tube, the clamp having a loop region for surrounding the tubular part, said loop region being open and terminating in fixing tabs (14, 16), each provided with at least one fixing hole (15, 17), and said clamp including a fixing device comprising a first fixing element (20) and a second fixing element that is complementary to the first so as to ensure that the clamp is clamped on the tubular part, the clamp being **characterized in that** at least one of said fixing holes (15, 17) presents at least one claw (21) enabling the clamp to be tightened with a ratchet effect by moving the first fixing element (20) in translation.

2. A clamp according to claim 1, **characterized in that** said first fixing element is a screw, and **in that** said complementary element is a nut.

3. A clamp according to claim 1 or 2, **characterized in that** it presents a plurality of claws (21) distributed around said hole (17).

4. A clamp according to any preceding claim, **characterized in that** it includes a protective element (12) surrounding the loop region (11 ).

5. A clamp according to claim 4, **characterized in that** the protective element (12) is made of elastomer.

6. A clamp according to any preceding claim, **characterized in that** the loop region (11 ) has a plane bearing face (18) adjacent to the fixing tabs (14, 16).

7. A method of installing a clamp according to any preceding claim, **characterized in that** it comprises:
a) installing the loop region (11 ) around the tubular part (2);
b) inserting the first fixing element (20) by translation to perform said preliminary tightening by ratcheting;
c) positioning the clamp (1 ) at a desired location on the tubular part (2); and
d) clamping the clamp by means of the complementary fixing element.

8. A method according to claim 7, **characterized in that** the fixing device is a screw-and-nut assembly, and step c) comprises:
c1 ) prepositioning the clamp (1 ) on the tubular part (2);
c2) engaging the screw (20) in the corresponding nut; and
c3) final positioning of the clamp (1 ) at the desired location.

## Patentansprüche

1. Schelle zur Befestigung für ein röhrenförmiges Teil, wie ein Kabel, ein Schlauch, ein Verbindungsstück, oder aber ein Rohr, wobei die Schelle einen Schleifenbereich zum Umgeben des röhrenförmigen Teils aufweist, wobei der Schleifenbereich offen ist und durch Befestigungslaschen (14, 16), von denen jede mit mindestens einem Befestigungsloch (15, 17) versehen ist, beendet ist und eine Befestigungsvorrichtung umfasst, welche ein erstes Befestigungselement (20) sowie ein zweites, das erste ergänzendes Befestigungselement zur Gewährleistung des Festziehens der Schelle auf dem röhrenförmigen Teil umfasst, **dadurch gekennzeichnet, dass** mindestens eines der Befestigungslöcher (15, 17) mindestens eine Kralle (21) aufweist, welche die Vorbefestigung der Schelle mittels eines Sperreffekts beim Verschieben des ersten Befestigungselements (20) ermöglicht.

2. Schelle gemäß Anspruch 1, **dadurch gekennzeichnet, dass** das erste Befestigungselement eine Schraube ist, und dass das ergänzende Element eine Mutter ist.

3. Schelle gemäß einem der Ansprüche 1 oder 2, **dadurch gekennzeichnet, dass** sie eine Vielzahl von Krallen (21) aufweist, die um den Umfang des Lochs (17) verteilt sind.

4. Schelle gemäß einem der vorhergehenden Ansprüche, **dadurch gekennzeichnet, dass** sie ein Schutzelement (12) umfasst, welches den Schleifenbereich (11 ) umgibt.

5. Schelle gemäß Anspruch 4, **dadurch gekennzeichnet, dass** das Schutzelement (12) aus einem Elastomer ist.

6. Schelle gemäß einem der vorhergehenden Ansprüche, **dadurch gekennzeichnet, dass** der Schleifenbereich (11 ) eine ebene Stützseite (18) aufweist, welche an die Befestigungslaschen (14, 16) angrenzt.

7. Verfahren zum Anbringen einer Schelle gemäß einem der vorhergehenden Ansprüche, **dadurch gekennzeichnet, dass** es umfasst:
a) ein Anordnen des Schleifenbereichs (11) um das röhrenförmige Teil (2) herum;
b) ein Einführen durch Verschieben des ersten Befestigungselements (20) zum Erzielen der Vorbefestigung durch Sperren;
c) eine Positionierung der Schelle (1) an einer gewünschten Stelle des röhrenförmigen Teils (2);
d) ein Festziehen der Schelle mit Hilfe des ergänzenden Befestigungselements.

8. Verfahren gemäß Anspruch 7, **dadurch gekennzeichnet, dass** die Befestigungsvorrichtung eine Schrauben-Mutter-Anordnung ist und der Schritt c) umfasst:
c1 ) eine Vorpositionierung der Schelle (1 ) auf dem röhrenförmigen Teil (2);
c2) ein Einsetzen der Schraube (20) auf die entsprechende Mutter;
c3) eine endgültige Positionierung der Schelle (1 ) an der gewünschten Stelle.
